# FASCICULE DE BREVET EUROPEEN

(11) **EP 2 209 615 B1**
(45) Date de publication et mention de la délivrance du brevet: **16.04.2014**
(21) Numéro de dépôt: 08864788.8
(22) Date de dépôt: 07.10.2008
(51) Int. Cl.: B29C 53/38, B29K 707/04, B32B 1/08, C04B 35/536, C04B 35/634, C04B 37/00, F16L 59/14

(54) **PROCÉDÉ DE FABRICATION D' UN DISPOSITIF ISOLANT TUBULAIRE ET DISPOSITIF CORRESPONDANT**
VERFAHREN ZUR HERSTELLUNG EINER RÖHRENISOLIERUNGSVORRICHTUNG UND ENTSPRECHENDE VORRICHTUNG
METHOD OF MANUFACTURING A TUBULAR INSULATING DEVICE AND CORRESPONDING DEVICE

(30) Priorité: 08.10.2007 FR 0707038
(43) Date de publication de la demande: 28.07.2010
(73) Titulaire: Carbone Lorraine Composants, 92230 Genevilliers (FR)
(72) Inventeur: LECLERCQ, Bérangère, F-87000 Limoges (FR); BERNARD, Olivier, Michigan 48642 Midland (US); POTIER, Alexandre, F-92230 Gennevilliers (FR)
(74) Mandataire: Schmidt, Martin Peter
(86) Numéro de dépôt international: PCT/FR2008/001397
(87) Numéro de publication internationale: WO 2009/080915

(56) Documents cités:
- DE-A1- 2 518 940
- FR-A- 2 849 651
- GB-A- 393 259
- US-A- 3 948 406
- US-A1- 2004 076 810
- US-A1- 2007 259 185

## Description

### Domaine de l'invention

La présente invention concerne la fabrication de matériaux carbonés réfractaires pouvant être utilisés comme isolants thermiques à haute température dans des fours fonctionnant à des températures élevées et sous atmosphère non oxydante.

La présente invention concerne plus particulièrement les isolants tubulaires ou cylindriques à base de graphite expansé, destinés aux fours hautes températures.

### Etat de la technique

La demande de brevet FR 2 849 651 décrit une structure isolante comprenant au moins une couche flexible à base de particules de graphite expansé comprimées « dense », dont la densité est au moins égale à 400 kg/m³ et au moins une autre couche, « sous-dense », également à base de graphite expansé, ayant une densité plus faible que celle de la couche dense, typiquement inférieure à 400 kg/m3.

La même demande de brevet décrit en outre l'utilisation de la structure isolante pour la réalisation de pièces de forme cylindrique, par enroulement en spirale de structures isolantes telles que décrites ci-dessus. Le principal inconvénient de cette technique réside dans le fait que les couches se décollent au cours du traitement thermique auquel est soumis le cylindre obtenu après enroulement.

Cette technique d'enroulement en spirales est également décrite dans d'autres brevets ou demandes de brevet tels que US 6,143,601 et US 2004/0076810.

D'autre part, la demande de brevet FR 2 849 651 décrit un procédé de fabrication comprenant, outre une étape d'enroulement, l'utilisation d'une technique de cintrage pour la fabrication de portions de cylindres avec la structure isolante telle que décrite ci-dessus.

### Problèmes posés

L'invention vise à résoudre simultanément plusieurs problèmes, le procédé de fabrication des dispositifs tubulaires isolants selon l'invention devant permettre tout à la fois :
- d'obtenir des dispositifs de haute tenue mécanique dans toute la plage des hautes températures d'utilisation, pouvant dépasser 1500°C,
- d'obtenir des dispositifs présentant un « rapport pouvoir isolant / masse » élevé,
- un procédé de fabrication simple et économique car faisant appel à une seule et même technologie, et en outre facile à adapter à toute forme de dispositif tubulaire.

### Objet de l'invention

Le demandeur a à présent mis au point un procédé de fabrication de dispositifs tubulaires servant notamment pour l'isolation de fours haute température par cintrage de structures isolantes permettant d'obtenir des éléments de parois tubulaires, puis collage sur chants de ces éléments et empilement de deux couches de structures isolantes avec un décalage des chants collés formant une jonction entre deux éléments juxtaposés.

Dans ce procédé de fabrication d'un dispositif isolant tubulaire comprenant une paroi latérale d'épaisseur Ep, de longueur axiale L, dotée d'une direction axiale, on approvisionne un matériau isolant à structure bidimensionnelle d'épaisseur E_{M} < Ep, avec par exemple E_{M} au plus égal à 0,5 .Ep, et on met en forme ledit matériau isolant en superposant une pluralité de N couches Cᵢ dudit matériau isolant, avec i allant de 2 à N, ledit dispositif isolant tubulaire comprenant au moins deux couches C₁ et C₂ dudit matériau isolant.

Ce procédé est caractérisé en ce que :
a) pour chaque couche Cᵢ, on forme une pluralité de nᵢ éléments isolants Eᵢ axiaux prédécoupés dans ledit matériau isolant de manière à ce que lesdits nᵢ éléments isolants Eᵢ puissent former ladite couche Cᵢ, après une juxtaposition bord à bord et grâce à une déformation adaptée,
b) on forme une ébauche dudit dispositif isolant tubulaire en :
   b1) assemblant, grâce à une colle, de préférence sur un mandrin axial de conformation, couche après couche, et en commençant par la première couche intérieure C₁, les nᵢ éléments Eᵢ de chaque couche Cᵢ juxtaposés bord à bord selon une pluralité de zones de jonction Jᵢ les éléments Eᵢ₊₁ de la couche Cᵢ₊₁ étant décalés par rapport aux éléments Eᵢ de la couche Cᵢ de manière à décaler la pluralité de zones de jonction Jᵢ₊₁ par rapport à la pluralité de zones de jonction Jᵢ, et ainsi à obtenir in fine un dispositif isolant tubulaire de grande résistance mécanique,
   b2) puis en polymérisant ladite colle, de manière à rigidifier ladite ébauche,
c) ladite ébauche d'élément tubulaire est soumise à un traitement thermique, de manière à carboniser ladite colle, et ainsi à obtenir, le cas échéant après séparation dudit mandrin, ledit dispositif isolant tubulaire.

Ce procédé permet de résoudre les problèmes posés.

En effet, la demanderesse a pu constater que les dispositifs obtenus par ce procédé de fabrication présentaient bien la haute tenue mécanique requise notamment pour leur usage de manchon isolant de fours dans un environnement industriel, et, grâce à un choix approprié du matériau isolant, un excellent rapport « pouvoir isolant / masse ».

Par ailleurs, ne nécessitant pas d'enroulement, la fabrication des ces dispositifs est à la fois simple et apte à s'appliquer à toute forme de dispositif tubulaire, puisqu'il comprend une préparation d'éléments isolants, par exemple par découpe dans un matériau isolant en bande ou en feuille, suivi de leur mise en forme éventuelle puis de leur assemblage grâce à une colle, en formant au moins deux couches. Ce procédé ne fait donc appel qu'à un nombre limité d'équipements industriels de sorte qu'il est à la fois économique et néanmoins d'une grande flexibilité pour former des dispositifs de toutes sortes de formes ou de dimensions.

### Description des figures

Toutes les figures sont relatives à l'invention.
Les figures 1a à 1g représentent schématiquement différentes étapes de la fabrication d'un dispositif isolant tubulaire (1) selon l'invention.
   La figure 1a représente, en coupe partielle selon un plan transversal, le matériau isolant (2) à structure bidimensionnelle d'épaisseur E_{M} servant à former lesdits éléments isolants (4).
   Les figures 1b et 1c sont des vues, en coupe transversale, des éléments isolants plans (4, 4a) formé par découplage dans ledit matériau (2) de la figure 1a, et notés respectivement E_{P1} et E_{P2}, l'élément isolant plan Eₚ₁ de la figure 1b, destiné à former un élément isolant de la première couche C₁, présentant une largeur l₁ moindre que celle l₂ de l' élément isolant plan E_{P2} de la figure 1c et destiné à former un élément isolant de la seconde couche C₂.
   Les figures 1d et 1e, analogues aux figures 1b et 1c, représentent les éléments isolants cintrés E_{C1} et E_{C2} formés par cintrage respectivement des éléments isolants plans E_{P1} et E_{P2} des figures 1b et 1c.

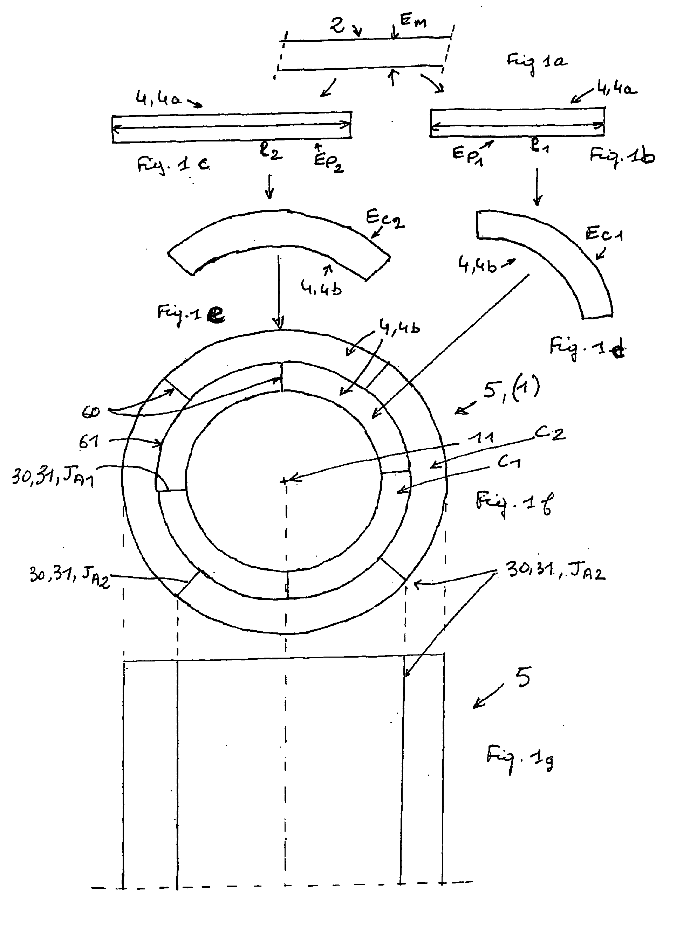

   La figure 1f est une vue, en coupe transversale dans un plan perpendiculaire à sa direction axiale (11), de l'ébauche (5) formée par assemblage, sur deux couches C₁ et C₂, des huit éléments isolants cintrés E_{C1} et E_{C2} des figures 1d et 1e (quatre éléments isolants par couche Ci), cet assemblage étant formé par un collage sur chant (60) entre éléments cintrés (4, 4b) d'une même couche Cᵢ, et par collage dit inter-couche (61) entre les couches C₁ et C₂, les couches C₁ et C₂ étant orientées de manière à ce que les jonctions axiales J_{A1} (30,31) de la première couche C₁ (3, 3a) soient angulairement décalées par rapport aux jonctions axiales J_{A2} (30, 31) de la seconde couche C₂ (3, 3b) .
   La figure 1g est une vue partielle de côté de l'ébauche (5) de la figure 1f.
La figure 2a est analogue à la figure 1f et représente une autre modalité d'ébauche (5), et donc dispositif isolant tubulaire (1) , comprenant également deux couches C₁ et C₂, chaque couche Cᵢ comprenant 3 éléments isolants (4, 4b) par couche Cᵢ.
   La figure 2b, analogue à la figure 2a, illustre une autre modalité d'ébauche (5) et de dispositif (1), dans laquelle le nombre N de couches Cᵢ est égal à 3, chaque couche Cᵢ comprenant deux éléments Eᵢ.
   Les figures 2c et 2d sont des vues agrandies des parties cerclées « c » et « d » de la figure 2b, qui illustrent respectivement le collage sur chant (60) entre éléments cintrés (4b) d'une même couche Cᵢ et le collage inter-couche (61) entre deux couches adjacentes Cᵢ et Cᵢ₊₁, soit entre les couches C₁ et C₂ sur la figure 2b.
Les figures 3a à 3f illustrent différentes formes de parois latérales (10) des dispositifs (1) et d'ébauches (5) correspondantes.

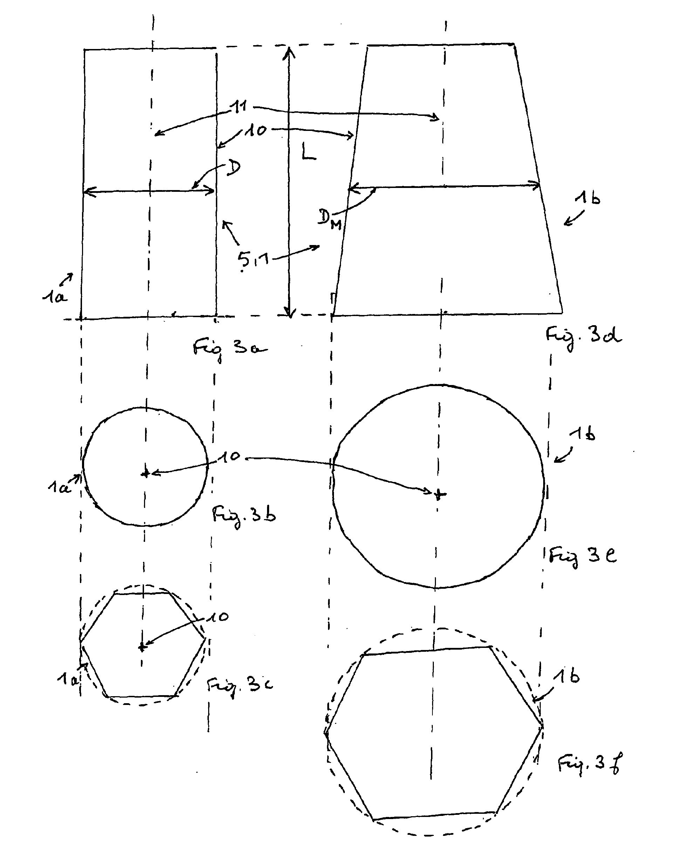

   Les figures 3a à 3c sont relatives à des tubes (1a) à parois latérales (10) à section constante, sur toute leur longueur axiale L.
   La figure 3a est une vue de côté de la paroi latérale (10), sur laquelle n'ont pas été représentées les zones de jonction axiale Jᵢ (30).
   Les figures 3b et 3c représentent deux sections transversales extérieures de la paroi latérale (10) de la figure 3a, la figure 3b correspondant à une paroi cylindrique de diamètre extérieur D, et la figure 3c correspondant à une paroi hexagonale à 6 pans dont la section extérieure est inscrite dans un cercle de diamètre D.
   Les figures 3d à 3f, analogues respectivement aux figures 3a à 3c, sont relatives à des tubes (1b) à section variable sur leur longueur axiale L et de diamètre extérieure moyen D_{M} à mi-hauteur.
   La figue 3d représente la paroi (10) de forme tronconique en vue de côté.
   La figure 3e schématise le cas d'une section circulaire, tandis que la figure 3f schématise le cas d'une section polygonale (hexagonale).

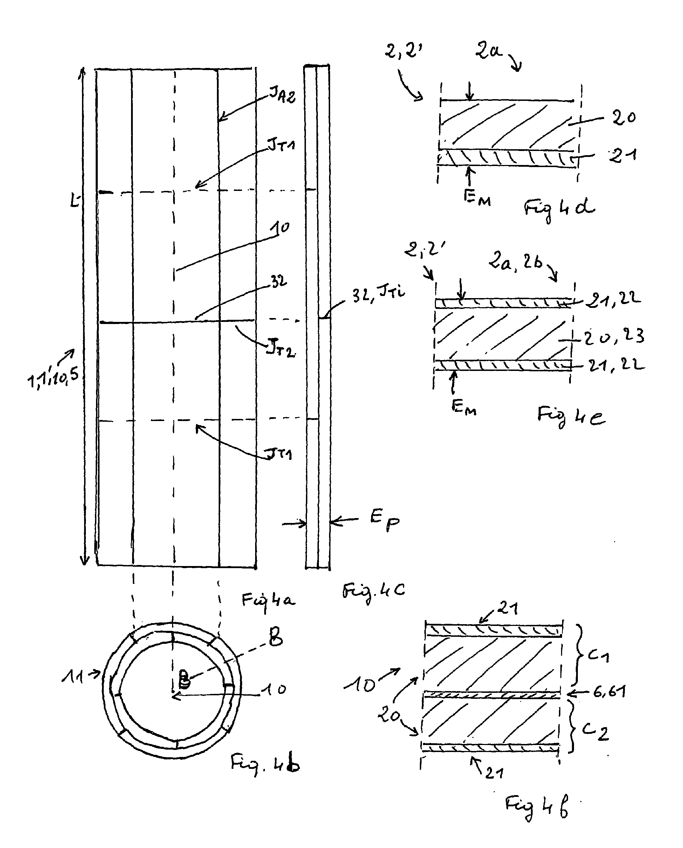

La figure 4a, analogue à la figure 1g ou 3a, représente un dispositif (1) ou une ébauche (5) dite de grande longueur axiale L, dont chaque couche Cᵢ comprend au moins une zone de jonction transversale J_{Ti} (32) afin de rabouter lesdits éléments cintrés (4, 4b) selon ladite direction axiale (11). La couche intérieure C₁ (3a) comprend deux jonctions transversales J_{T1} décalées axialement par rapport à la jonction transversale unique J_{T2} de la couche extérieure C₂ (3b).
   La figure 4b est une vue de dessous du dispositif (1) de la figure 4a.
   La figure 4c est une coupe axiale de la paroi (10) selon le plan B-B de la figure 4b passant par ladite direction axiale (11).
   Les figures 4d et 4e illustrent, en coupe transversale partielle, deux modalités de matériau (2') à base de graphite expansé constituant ledit matériau isolant (2) et formant un matériau multicouche (2a).
   La figure 4d représente un matériau multicouche (2a) comprenant deux couches de graphite expansé : une couche dite « de faible densité » (20) et une couche dite de « haute densité » (21), la couche de haute densité (21) présentant par exemple une épaisseur au moins deux fois plus faible que celle de la couche de faible densité (20).
   La figure 4e, analogue à la figure 4d, forme un matériau tri-couche (2) comprenant une couche centrale (23) formant une couche de faible densité (20), et deux couches externes (22) formant deux couches de haute densité (21).
   La figure 4f est une coupe transversale partielle d'une paroi (10) comprenant deux couches C₁ et C₂ formées à partir du matériau de la figure 4d et assemblées par une couche de colle (61) entre les couches C₁ et C₂. Comme on peut le voir sur la figure 4f, les couches de haute densité (21) forment les surfaces intérieure et extérieure de ladite paroi (10).

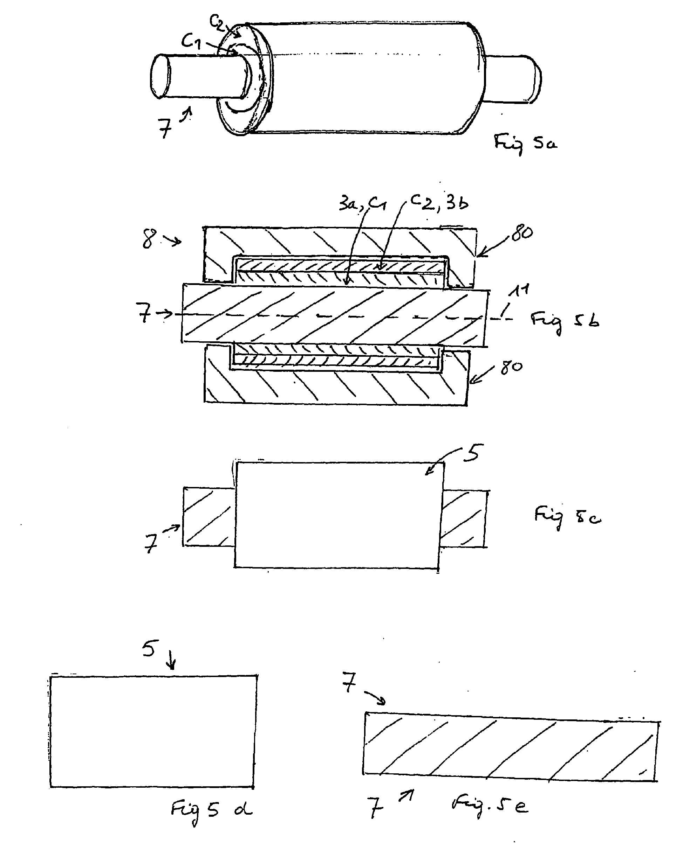

Les figures 5a à 5e illustrent schématiquement différentes vues d'une modalité de fabrication d'une ébauche (5) utilisant à la fois un mandrin de conformation (7) et un moule de conformation (8).
   La figure 5a représente, en perspective, deux couches C₁ et C₂ de matériau isolant (2,2') disposées sur le mandrin (7).
   La figure 5b représente une coupe, selon la direction axiale (11), du moule de conformation (8) à deux demi-coques (80) contenant l'ensemble constitué par les éléments de la figure 5a, de manière à comprimer lesdites couches Cᵢ (3) entre un mandrin rigide et les demi-coques typiquement métalliques du moule, et ainsi à donner à ladite ébauche (5) des dimensions prédéterminées.
   La figure 5c représente en vue de côté l'ensemble, en sortie du moulé, formé par le mandrin (7) plus l'ébauche (5) aux dimensions prédéterminées, la figure 5d représentant l'ébauche (5) séparée du mandrin (7) représenté sur la figure 5e.

### Description détaillée de l'invention

Selon l'invention, et comme illustré sur les figures 1g et 4a, lesdites zones de jonction Jᵢ (30) peuvent comprendre des zones de jonction axiales J_{Ai} (31) de longueur axiale au plus égale à L.

Cependant, comme illustré sur les figures 4a et 4c, lesdites zones de jonction Jᵢ (30) peuvent comprendre des zones de jonction transversales J_{Ti} (32) de manière à obtenir un dispositif isolant tubulaire (1, 1') dit de grande longueur axiale L.

Par contre, quand il n'est pas nécessaire de rabouter les éléments (4) selon ladite direction axiale (11) comme illustré sur les figures 4a et 4c, lesdites zones de jonction Jᵢ peuvent être constituées par des zones de jonction axiales J_{Ai} (31) de longueur axiale égale à L.

Avantageusement, lesdits nᵢ éléments isolants Eᵢ axiaux prédécoupés (4) d'une même couche Cᵢ peuvent être identiques, ladite pluralité de jonctions Jᵢ formant ladite pluralité de jonctions axiales J_{Ai} (31), les ni jonctions axiales J_{Ai} (31) de ladite pluralité étant espacées angulairement par rapport à ladite direction axiale (11) d'un angle de 360°/nᵢ. Cependant, dans le cas de la fabrication d'un dispositif « sur mesure » de configuration relativement complexe, il serait possible de juxtaposer des éléments isolants (4) différents par leur forme, à la manière dont on assemble les différentes pièces d'un puzzle, mais sur une surface déployée dans l'espace tridimensionnel.

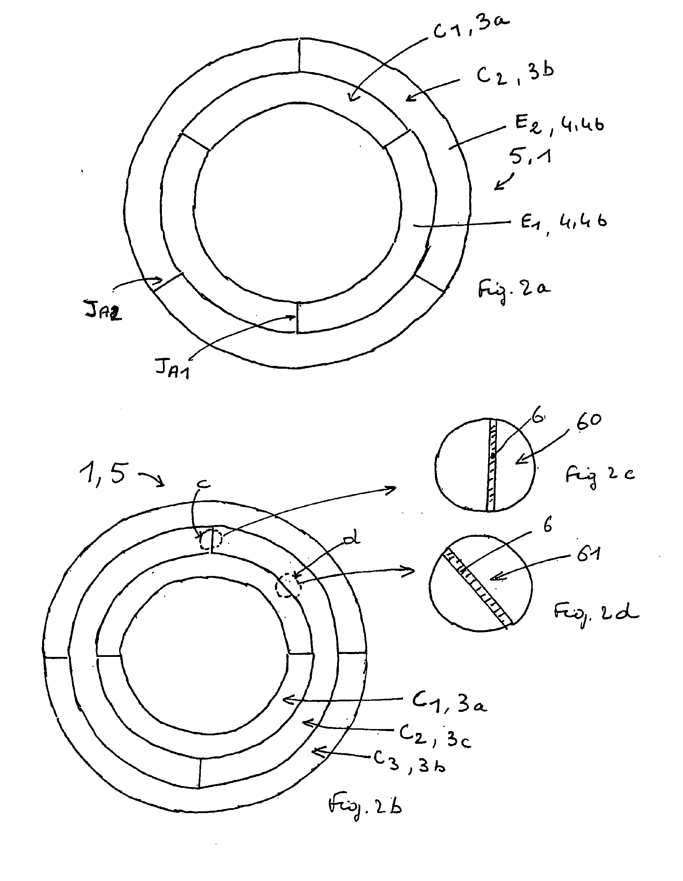

Comme illustré sur les figures 1f, 2a et 2b, le nombre N de couches Cᵢ (3) peut être au moins égal à 2.

Le nombre nᵢ d'éléments isolants Eᵢ (4) peut être un nombre n qui reste le même pour chaque couche Cᵢ (3) dudit dispositif isolant tubulaire (1), n variant typiquement avec ledit diamètre moyen D.

Ainsi, par exemple :
- n peut valoir 2 pour D allant de 286 mm à 573 mm,
- n peut valoir 3 pour D supérieur à 573 mm et inférieur à 907 mm,
- n peut valoir 4 pour D au moins égal à 907 mm.

Comme illustré sur les figures la à 1f, avant l'étape b) du procédé, on peut former à partir des dits nᵢ éléments isolants (4), par exemple à partir de nᵢ éléments isolants plans (4a), nᵢ éléments isolants cintrés (4b), de manière à présenter un rayon de courbure Rᵢ dans un plan transversal perpendiculaire à ladite direction axiale (11), correspondant à celui de ladite couche Cᵢ correspondante, ledit rayon Rᵢ augmentant d'une couche Cᵢ à la couche suivante Cᵢ₊₁ de plus grand diamètre moyen Dᵢ₊₁.

Dans le procédé selon l'invention, et comme illustré sur les figures 5a à 5e, lors de ladite étape b2), ladite ébauche (5) peut être placée dans un moule de conformation (8) comprenant, par exemple, deux demi-coques (80), de manière à ce que, les deux demi-coques (80) réunies et fermées assurent à ladite ébauche (5) et in fine audit dispositif isolant tubulaire (1) des dimensions ou cotes géométriques prédéterminées et reproductibles.

Selon l'invention, ledit matériau isolant (2) peut être un matériau (2') à base de graphite expansé d'épaisseur E_{M} allant de 2 à 30 mm, et allant de préférence de 5 à 20 mm.

De préférence, et comme illustré sur les figures 4d et 4e, ledit matériau à base de graphite expansé (2') peut être un matériau multicouche (2a) comprenant au moins une couche dite de « faible » densité (20), sa densité étant inférieure à 0,4 g/cm³ (400 kg/m³) et au moins une couche dite de « haute » densité (21), sa densité étant au moins égale à 0,4 g/cm³.

Ladite couche de haute densité (21) peut présenter une densité allant de 0,8 g/cm³ à 1,2 g/cm³ et dans lequel ladite couche de faible densité (20) présente une densité allant de 0,03 g/cm³ à 0,2 g/cm³.

Comme illustré sur la figure 4e, ledit matériau multicouche (2a) peut être un matériau dit « tricouche » (2b) comprenant deux couches externes (22, 21) de haute densité disposées de part et d'autre d'une couche centrale (23, 20) de faible densité.

Avantageusement, de manière à obtenir un rapport « pouvoir isolant / masse » élevé, l'épaisseur E_{f} de la couche centrale de faible densité (20, 23) peut être au moins deux fois plus élevée que l'épaisseur Eₕ de la couche externe de haute densité (21, 22), et de préférence au moins trois fois plus élevée.

Selon l'invention, ladite colle (6) peut comprendre une résine thermodurcissable, par exemple une résine phénolique, ou une résine thermoplastique, ladite colle étant sous forme de poudre ou sous forme liquide, ladite colle étant avantageusement chargée d'une poudre électro-conductrice de graphite ou de noir de carbone.

Ledit traitement thermique peut comprendre une cuisson à une température d'au moins 800° C, et de préférence d'au moins 1000°C.

Ledit traitement thermique peut comprendre un traitement complémentaire de pyrolyse flash de méthane de manière à augmenter la rigidité dudit dispositif isolant.

En outre, ledit traitement thermique peut comprendre une étape de purification dudit dispositif isolant dans laquelle ledit dispositif isolant est porté à 2000°C, de manière à éliminer tout élément volatil.

Enfin, ledit traitement thermique peut être suivi d'un usinage.

Comme illustré sur les figures 3a à 3c, ledit dispositif isolant tubulaire (1) peut former un tube (1a) à section constante sur sa longueur axiale L, ladite section étant circulaire de diamètre D ou ovale ou polygonale.

Cependant, comme illustré sur les figures 3d à 3f, ledit élément isolant tubulaire (1) peut former un tube (1b) à section uniformément variable sur sa longueur axiale L, ladite section étant circulaire de diamètre moyen D_{M} ou ovale ou polygonale.

Par exemple, ladite longueur axiale L peut varier de 0,1m à 3m, et ladite épaisseur Ep peut aller de 5 mm à 80 mm, le rapport L/D ou L/D_{M} pouvant aller de 0,5 à 5.

Un autre objet de l'invention est constitué par un dispositif isolant tubulaire (1) typiquement obtenu par le procédé selon l'invention. Ce dispositif isolant tubulaire (1) comprend une paroi latérale (10) d'épaisseur Ep allant de 5 mm à 80 mm, de longueur axiale L allant de 0,1m à 3m, dotée d'une direction axiale (11), ladite paroi latérale (10) formant une superposition étant constitué par une pluralité de N couches Cᵢ (3) d'un matériau isolant (2), avec i allant de 2 à N.

Entre autres,
a) chaque couche Cᵢ (3) comprend une pluralité de nᵢ éléments isolants Eᵢ axiaux (4) constitués dudit matériau isolant (2) de manière à ce que lesdits éléments isolants Eᵢ axiaux (4) soient juxtaposés bord (40) à bord (40') selon une pluralité de zones de jonction Jᵢ (30),
b) deux couches successives Cᵢ et Cᵢ₊₁ sont assemblées grâce à une colle (6), lesdites couches successives Cᵢ et Cᵢ₊₁ étant orientées l'une par rapport à l'autre de manière à ce que la pluralité de zones de jonction Jᵢ₊₁ de ladite couche Cᵢ₊₁ soit décalée par rapport à la pluralité de zones de jonction Jᵢ e ladite couche Cᵢ, et qu'ainsi ledit dispositif isolant tubulaire (1) obtenu in fine présente une grande résistance mécanique.

Dans ce dispositif, ledit matériau isolant (2) sera un matériau (2') à base de graphite expansé d'épaisseur E_{M} allant de 2 à 30 mm, et allant de préférence de 5 à 20 mm.

Ledit matériau à base de graphite expansé (2') sera un matériau multicouche (2a) comprenant au moins une couche dite de « faible » densité (20), sa densité étant inférieure à 0,4 g/cm³ (400 kg/m³) et au moins une couche dite de « haute » densité (21), sa densité étant au moins égale à 0,4 g/cm³.

Ladite couche de haute densité (21) présentera une densité allant de 0,8 g/cm³ à 1,2 g/cm³ et dans lequel ladite couche de faible densité (20) présente une densité allant de 0, 03 g/cm³ à 0,2 g/cm³.

Ledit matériau multicouche (2a) peut être un matériau dit « tricouche » (2b) comprenant deux couches externes (22, 21) de haute densité disposées de part et d'autre d'une couche centrale (20, 23) de faible densité.

Ladite couche centrale de faible densité (20, 23) peut présenter une épaisseur E_{f} au moins deux fois plus élevée que l'épaisseur Eₕ de la couche externe de haute densité (21, 22), et de préférence au moins trois fois plus élevée.

### Exemples:

Les figures 1a à 5e constituent des exemples de réalisation.

Pour la mise en oeuvre du procédé selon l'invention, on a aussi fabriqué ainsi des dispositifs de forme complexe ne présentant pas de symétrie de révolution, et notamment dans ce cas, on a utilisé des moyens informatiques permettant, à partir de la définition géométrique précise dudit dispositif (1) introduite en mémoire d'ordinateur, de définir la pluralité d'éléments isolants Eᵢ de chaque couche Cᵢ, de manière à ce que l'ensemble des zones de jonction (30, 31, 32) soient décalées.

Dans le cas où les éléments isolants (4) ne sont pas de forme simple et ne conduisent pas à un pavage régulier et compact, on a utilisé des moyens informatiques pour optimiser le découpage de ces éléments et minimiser les chutes et pertes de matériau isolant.

Toutefois, on a pu recycler ces chutes en les homogénéisant et en les incorporant en faible pourcentage (de préférence < 10 %) dans la couche de faible densité (20).

On a utilisé différents types de mandrins. Les mandrins ont été revêtus d'agents glissants de manière à faciliter la séparation entre ébauche (5) et mandrin (7). On a aussi utilisé des mandrins à noyau rétractable, de manière à faciliter encore cette séparation.

### AVANTAGES DE L'INVENTION

Le procédé selon l'invention présente de grands avantages. En effet, outre qu'il résout les problèmes posés, il peut être facilement automatisé et adapté à toute configuration de dispositif (1), même de forme complexe.

| **Liste des repères** | |
|---|---|
| Dispositif isolant tubulaire | 1 |
| Dispositif 1 de grande longueur axiale L | 1' |
| Tube à section constante | 1a |
| Tube à section variable | 1b |
| Paroi latérale | 10 |
| Direction axiale | 11 |
| Matériau isolant à structure bidimensionnelle | 2 |
| Matériau à base de graphite expansé. | 2' |
| Matériau multicouche | 2a |
| Matériau tricouche | 2b |
| Couche de « faible densité » | 20 |
| Couche de « haute densité » | 21 |
| Couche externe | 22 |
| Couche centrale | 23 |
| Couche Cᵢ de 1 | 3 |
| Couche intérieure | 3a |
| Couche extérieure | 3b |
| Couche centrale | 3c |
| Zone de jonction Jᵢ de 3 | 30 |
| Zone de jonction axiale J_{Ai} | 31 |
| Zone de jonction transversale J_{Ti} | 32 |
| Elément isolant Eᵢ axial | 4 |
| Elément isolant plan E_{Pi} | 4a |
| Elément isolant cintré E_{Ci} | 4b |
| Bord de juxtaposition | 40,40' |
| Ebauche de 1 | 5 |
| Colle | 6 |
| Zone de collage sur chant bord à bord | 60 |
| Zone de collage inter-couche | 61 |
| Mandrin axial | 7 |
| Moule de conformation | 8 |
| Demi-coques du moule | 80 |

## Revendications

1. Procédé de fabrication d'un dispositif isolant tubulaire (1) comprenant une paroi latérale (10) d'épaisseur Ep, de longueur axiale L, dotée d'une direction axiale (11), dans lequel on approvisionne un matériau isolant (2) à structure bidimensionnelle d'épaisseur E_{M} < Ep, avec par exemple E_{M} au plus égal à 0,5.Ep, et on met en forme ledit matériau isolant (2) en superposant une pluralité de N couches Cᵢ (3) dudit matériau isolant (2), avec N au moins égal à 2 et i allant de 2 à N, ledit dispositif isolant tubulaire (1) comprenant au moins deux couches Cᵢ et C₂ (3) dudit matériau isolant (2), **caractérisé en ce que** :
a) pour chaque couche Cᵢ (3), on forme une pluralité de nᵢ éléments isolants Eᵢ axiaux (4) prédécoupés dans ledit matériau isolant (2) de manière à ce que lesdits nᵢ éléments isolants Eᵢ (4) puissent former ladite couche Ci(3), après une juxtaposition bord (40) à bord (40') et grâce à une déformation adaptée,
b) on forme une ébauche (5) dudit dispositif isolant tubulaire (1) en :
b1) assemblant, grâce à une colle (6), de préférence sur un mandrin axial de conformation (7), couche après couche, et en commençant par la première couche intérieure C₁(3a), les nᵢ éléments Eᵢ (4) de chaque couche Cᵢ (3) juxtaposés bord (40) à bord (40') selon une pluralité de zones de jonction Jᵢ(30), les éléments Eᵢ₊₁ de la couche Cᵢ₊₁ étant décalés par rapport aux éléments Eᵢ de la couche plus intérieure Cᵢ, de manière à ce que la pluralité de zones de jonction Jᵢ₊₁ soit décalée par rapport à la pluralité de zones de jonction Jᵢ, et qu'ainsi ledit dispositif isolant tubulaire (1) obtenu in fine présente une grande résistance mécanique,
b2) puis en polymérisant ladite colle (6), de manière à rigidifier ladite ébauche (5),
c) ladite ébauche (5) d'élément tubulaire est soumise à un traitement thermique, ledit traitement thermique comprenant une cuisson à une température d'au moins 800°C, de manière à carboniser ladite colle (6), et ainsi à obtenir, le cas échéant après séparation dudit mandrin, ledit dispositif isolant tubulaire (1).

2. Procédé selon la revendication 1 dans lequel lesdites zones de jonction Jᵢ (30) comprennent des zones de jonction axiales J_{Ai} (31) de longueur axiale au plus égale à L.

3. Procédé selon la revendication 2 dans lequel lesdites zones de jonction Jᵢ (30) comprennent des zones de jonction transversales J_{Ti} (32) de manière à obtenir un dispositif isolant tubulaire (1, 1') dit de grande longueur axiale L.

4. Procédé selon une quelconque des revendications 1 à 3 dans lequel, avant l'étape b), on forme à partir des dits nᵢ éléments isolants (4), par exemple à partir de nᵢ éléments isolants plans (4a), nᵢ éléments isolants cintrés (4b), de manière à présenter un rayon de courbure Rᵢ dans un plan transversal perpendiculaire à ladite direction axiale (11), correspondant à celui de ladite couche Cᵢ correspondante, ledit rayon Rᵢ augmentant d'une couche Cᵢ à la couche suivante Cᵢ₊₁ de plus grand diamètre moyen Dᵢ₊₁.

5. Procédé selon une quelconque des revendications 1 à 4 dans lequel, lors de ladite étape b2), ladite ébauche (5) est placée dans un moule de conformation (8) comprenant, par exemple, deux demi-coques (80), de manière à ce que, les deux demi-coques (80) réunies et fermées assurent à ladite ébauche (5) et in fine audit dispositif isolant tubulaire (1) des dimensions ou cotes géométriques prédéterminées et reproductibles.

6. Procédé selon une quelconque des revendications 1 à 5 dans lequel ledit matériau isolant (2) est un matériau (2') à base de graphite expansé d'épaisseur E_{M} allant de 2 à 30 mm, et allant de préférence de 5 à 20 mm.

7. Procédé selon la revendication 6 dans lequel ledit matériau à base de graphite expansé (2') est un matériau multicouche (2a) comprenant au moins une couche dite de « faible » densité (20), sa densité étant inférieure à 0,4 g/cm³ (400 kg/m³) et au moins une couche dite de « haute » densité (21), sa densité étant au moins égale à 0,4 g/cm³.

8. Procédé selon la revendication 7 dans lequel ladite couche de haute densité (21) présente une densité allant de 0,8 g/cm³ à 1,2 g/cm³ et dans lequel ladite couche de faible densité (20) présente une densité allant de 0,03 g/cm³ à 0,2 g/cm³.

9. Procédé selon une quelconque des revendications 7 à 8 dans lequel ledit matériau multicouche (2a) est un matériau dit « tricouche » (2b) comprenant deux couches externes (22, 21) de haute densité disposées de part et d'autre d'une couche centrale (23, 20) de faible densité et dans lequel l'épaisseur E_{f} de la couche centrale de faible densité (20, 23) est au moins deux fois plus élevée que l'épaisseur Eₕ de la couche externe de haute densité (21, 22).

10. Procédé selon une quelconque des revendications 1 à 9 dans lequel ladite colle (6) comprend une résine thermodurcissable, par exemple une résine phénolique, ou une résine thermoplastique, ladite colle étant sous forme de poudre ou sous forme liquide, ladite colle étant avantageusement chargée d'une poudre électro-conductrice de graphite ou de noir de carbone.

11. Procédé selon une quelconque des revendications 1 à 10 dans lequel ledit traitement thermique comprend un traitement complémentaire de pyrolyse flash de méthane de manière à augmenter la rigidité dudit dispositif isolant.

12. Procédé selon une quelconque des revendications 1 à 11 dans lequel ledit traitement thermique comprend une étape de purification dudit dispositif isolant dans laquelle ledit dispositif isolant est porté à 2000°C, de manière à éliminer tout élément volatil.

13. Procédé selon une quelconque des revendications 1 à 12 dans lequel ledit dispositif isolant tubulaire (1) forme un tube (1a) à section constante sur sa longueur axiale L, ladite section étant circulaire de diamètre D ou ovale ou polygonale, et dans lequel ladite longueur axiale L varie de 0,1 m à 3 m, ladite épaisseur Ep varie de 5 mm à 80 mm et le rapport L/D va de 0,5 à 5.

14. Procédé selon une quelconque des revendications 1 à 12 dans lequel ledit dispositif isolant tubulaire (1) forme un tube (1b) à section uniformément variable sur sa longueur axiale L, ladite section étant circulaire de diamètre moyen D_{M} ou ovale ou polygonale, et dans lequel ladite longueur axiale L varie de 0,1 m à 3 m, ladite épaisseur Ep varie de 5 mm à 80 mm et le rapport L/D_{M} va de 0,5 à 5.

15. Dispositif isolant tubulaire (1) comprenant une paroi latérale (10) d'épaisseur Ep allant de 5 mm à 80 mm, de longueur axiale L allant de 0,1 m à 3 m, dotée d'une direction axiale (11), ladite paroi latérale (10) formant une superposition étant constitué par une pluralité de N couches Cᵢ (3) d'un matériau isolant (2), avec i allant de 2 à N, **caractérisé en ce que** :
a) chaque couche Cᵢ (3) comprend une pluralité de nᵢ éléments isolants Eᵢ axiaux (4) en ledit matériau isolant (2) de manière à ce que lesdits éléments isolants Eᵢ axiaux (4) soient juxtaposés bord (40) à bord (40') selon une pluralité de zones de jonction Jᵢ(30),
b) deux couches successives Cᵢ et C₁₊₁ sont assemblées grâce à une colle (6), lesdites couches successives Cᵢ et Cᵢ₊₁ étant orientées l'une par rapport à l'autre de manière à ce que la pluralité de zones de jonction Jᵢ₊₁ de ladite couche Cᵢ₊₁ soit décalée par rapport à la pluralité de zones de jonction Jᵢ e ladite couche Cᵢ, et qu'ainsi ledit dispositif isolant tubulaire (1) obtenu in fine présente une grande résistance mécanique, et dans lequel :
1) ledit matériau isolant (2) est un matériau (2') à base de graphite expansé d'épaisseur E_{M} allant de 2 à 30 mm, et allant de préférence de 5 à 20 mm,
2) lequel ledit matériau à base de graphite expansé (2') est un matériau multicouche (2a) comprenant une couche dite de « faible » densité (20), sa densité allant de 0,03 g/cm³ à 0,2 g/cm³, et au moins une couche dite de « haute » densité (21), sa densité allant de 0,8 g/cm³ à 1,2 g/cm³.

## Patentansprüche

1. Verfahren zum Herstellen einer röhrenförmigen Isoliervorrichtung (1), umfassend eine Seitenwand (10) einer Dicke Ep, einer Axiallänge L, mit einer Axialrichtung (11) versehen, wobei ein Isoliermaterial (2) mit einer zweidimensionalen Struktur einer Dicke E_{M} < Ep bereitgestellt wird, wobei E_{M} beispielsweise gleich 0,5. Ep ist, und das Isoliermaterial (2) gestaltet wird, indem eine Vielzahl von N Schichten Cᵢ (3) des Isoliermaterials (2) übereinander gelegt wird, wobei N mindestens gleich 2 ist und i von 2 bis N reicht, wobei die röhrenförmige Isoliervorrichtung (1) mindestens zwei Schichten C₁ und C₂ (3) des Isoliermaterials (2) umfasst, **dadurch gekennzeichnet, dass**:
a) für jede Schicht Cᵢ (3) eine Vielzahl von nᵢ axialen Isolierelementen Eᵢ (4) gebildet wird, die aus dem Isoliermaterial (2) derart vorgeschnitten werden, dass die nᵢ Isolierelemente Eᵢ (4) nach dem auf Stoß legen des Randes (40) und des Randes (40') und dank einer geeigneten Verformung die Schicht Cᵢ (3) bilden können,
b) ein Rohteil (5) der röhrenförmigen Isoliervorrichtung (1) durch folgende Schritte gebildet wird:
b1) Zusammenfügen mittels eines Klebstoffs (6), bevorzugt auf einem axialen Formgebungsdorn (7), Schicht für Schicht und beginnend mit der ersten unteren Schicht C₁ (3a), der nᵢ Elemente Eᵢ (4) jeder Schicht Cᵢ (3), wobei der Rand (40) und der Rand (40') auf Stoß gelegt sind,
gemäß einer Vielzahl von Anschlusszonen Jᵢ (30), wobei die Elemente Eᵢ₊₁ der Schicht Cᵢ₊₁ im Verhältnis zu den Elementen Ei der untersten Schicht Cᵢ derart versetzt sind, dass die Vielzahl von Anschlusszonen Jᵢ₊₁ im Verhältnis zu der Vielzahl von Anschlusszonen Jᵢ versetzt ist, und dass somit die letztendlich erzielte röhrenförmige Isoliervorrichtung (1) eine große mechanische Festigkeit aufweist,
b2) Polymerisieren des Klebstoffs (6) um das Rohteil (5) zu versteifen,
c) Unterziehen des Rohteils (5) des röhrenförmigen Elements einer Wärmebehandlung, wobei die Wärmebehandlung ein Brennen auf einer Temperatur von mindestens 800 °C umfasst, um den Klebstoff (6) zu verkohlen und somit, gegebenenfalls nach Ablösen von dem Dorn, die röhrenförmige Isoliervorrichtung (1) zu erzielen.

2. Verfahren nach Anspruch 1, wobei die Anschlusszonen Jᵢ (30) axiale Anschlusszonen J_{Ai} (31) mit einer Axiallänge höchstens gleich L umfassen.

3. Verfahren nach Anspruch 2, wobei die Anschlusszonen Jᵢ (30) Queranschlusszonen J_{Ti} (32) umfassen, um eine so genannte röhrenförmige Isoliervorrichtung (1, 1') großer Axiallänge L zu erzielen.

4. Verfahren nach einem der Ansprüche 1 bis 3, wobei in Schritt b) aus den nᵢ Isolierelementen (4), beispielsweise aus nᵢ ebenen Isolierelementen (4a), nᵢ gebogene Isolierelemente (4b) gebildet werden, um einen Krümmungsradius Rᵢ in einer Querebene, die zur Axialrichtung (11) rechtwinklig ist, aufzuweisen, der demjenigen der entsprechenden Schicht Cᵢ entspricht, wobei der Radius Rᵢ von einer Schicht Cᵢ zur nächsten Schicht Cᵢ₊₁ mit einem größeren mittleren Durchmesser Dᵢ₊₁ zunimmt.

5. Verfahren nach einem der Ansprüche 1 bis 4, wobei in Schritt b2) das Rohteil (5) in eine Formgebungsform (8) gelegt wird, die beispielsweise zwei Schalenhälften (80) umfasst, so dass die beiden zusammengeführten und geschlossenen Schalenhälften (80) für das Rohteil (5) und letztendlich die röhrenförmige Isoliervorrichtung (1) vorbestimmte und reproduzierbare Dimensionen oder geometrische Abmessungen sicherstellen.

6. Verfahren nach einem der Ansprüche 1 bis 5, wobei das Isoliermaterial (2) ein Material (2') auf Basis von expandiertem Graphit mit einer Dicke E_{M} ist, die von 2 bis 30 mm und bevorzugt von 5 bis 20 mm reicht.

7. Verfahren nach Anspruch 6, wobei das Material (2') auf Basis von expandiertem Graphit ein mehrschichtiges Material (2a) ist, das mindestens eine so genannte Schicht (20) "geringer" Dichte umfasst, wobei seine Dichte weniger als 0,4 g/cm³ (400 kg/m3) beträgt, und mindestens eine so genannte Schicht (21) "hoher" Dichte umfasst, wobei seine Dichte mindestens gleich 0,4 g/cm³ ist.

8. Verfahren nach Anspruch 7, wobei die Schicht (21) hoher Dichte eine Dichte aufweist, die von 0,8 g/cm³ bis 1,2 g/cm³ reicht, und wobei die Schicht (20) geringer Dichte eine Dichte aufweist, die von 0,03 g/cm³ bis 0,2 g/cm³ reicht.

9. Verfahren nach einem der Ansprüche 7 bis 8, wobei das mehrschichtige Material (2a) ein so genanntes "dreischichtiges" Material (2b) ist, das zwei externe Schichten (22, 21) hoher Dichte umfasst, die auf beiden Seiten einer mittleren Schicht (23, 20) geringer Dichte angeordnet sind, und wobei die Dicke E_{f} der mittleren Schicht (20, 23) geringer Dichte mindestens zweimal so groß ist wie die Dicke Eₕ der externen Schicht (21, 22) hoher Dichte.

10. Verfahren nach einem der Ansprüche 1 bis 9, wobei der Klebstoff (6) einen Duroplast, beispielsweise ein Phenolharz, oder einen Thermoplast umfasst, wobei der Klebstoff in Pulverform oder in flüssiger Form vorliegt, wobei der Klebstoff vorteilhaft mit einem elektrisch leitenden Graphitpulver oder Industrieruß angereichert ist.

11. Verfahren nach einem der Ansprüche 1 bis 10, wobei die Wärmebehandlung eine ergänzende Behandlung durch Methan-Flash-Pyrolyse umfasst, um die Steifigkeit der Isoliervorrichtung zu steigern.

12. Verfahren nach einem der Ansprüche 1 bis 11, wobei die Wärmebehandlung einen Schritt der Reinigung der Isoliervorrichtung umfasst, bei dem die Isoliervorrichtung auf 2000 °C erhitzt wird, um eventuelle flüchtige Bestandteile zu beseitigen.

13. Verfahren nach einem der Ansprüche 1 bis 12, wobei die röhrenförmige Isoliervorrichtung (1) eine Röhre (1a) mit konstantem Querschnitt über ihre Axiallänge L bildet, wobei der Querschnitt kreisförmig mit einem Durchmesser D oder oval oder vieleckig ist, und wobei die Axiallänge L von 0,1 m bis 3 m variiert, wobei die Dicke Ep von 5 mm bis 80 mm variiert und das Verhältnis L/D von 0, 5 bis 5 reicht.

14. Verfahren nach einem der Ansprüche 1 bis 12, wobei die röhrenförmige Isoliervorrichtung (1) eine Röhre (1b) mit einem einheitlich variablen Querschnitt über ihre Axiallänge L bildet, wobei der Querschnitt kreisförmig mit einem Durchmesser D_{M} oder oval oder vieleckig ist, und wobei die Axiallänge L von 0,1 m bis 3 m variiert, wobei die Dicke Ep von 5 mm bis 80 mm variiert und das Verhältnis L/D_{M} von 0,5 bis 5 reicht.

15. Röhrenförmige Isoliervorrichtung (1), umfassend eine Seitenwand (10) einer Dicke Ep, die von 5 mm bis 80 mm reicht, einer Axiallänge L, die von 0,1 m bis 3 m reicht, mit einer Axialrichtung (11) versehen, wobei die Seitenwand (10) eine Überlagerung bildet, die aus einer Vielzahl von N Schichten Cᵢ (3) eines Isoliermaterials (2) besteht, wobei i von 2 bis N reicht, **dadurch gekennzeichnet, dass**:
a) jede Schicht Cᵢ (3) eine Vielzahl von ni axialen Isolierelementen Eᵢ (4) aus dem Isoliermaterial (2) umfasst, so dass die axialen Isolierelemente Eᵢ (4) mit dem Rand (40) und dem Rand (40') gemäß einer Vielzahl von Anschlusszonen Jᵢ (30) auf Stoß gelegt sind,
b) zwei aufeinanderfolgende Schichten Cᵢ und Cᵢ₊₁ anhand eines Klebstoffs (6) zusammengefügt werden, wobei die aufeinanderfolgenden Schichten Cᵢ und Cᵢ₊₁ im Verhältnis zueinander derart orientiert sind, dass die Vielzahl von Anschlusszonen Jᵢ₊₁ der Schicht Cᵢ₊₁ im Verhältnis zu der Vielzahl von Anschlusszonen Jᵢ der Schicht Cᵢ versetzt sind, und dass somit die letztendlich erzielte röhrenförmige Isoliervorrichtung (1) eine große mechanische Festigkeit aufweist, und wobei:
1) das Isoliermaterial (2) ein Material (2') auf Basis von expandiertem Graphit einer Dicke E_{M} ist, die von 2 bis 30 mm reicht und bevorzugt von 5 bis 20 mm reicht,
2) das Material (2') auf Basis von expandiertem Graphit ein mehrschichtiges Material (2a) ist, das eine so genannte Schicht (20) "geringer" Dichte umfasst, wobei seine Dichte von 0,03 g/cm³ bis 0,2 g/cm³ reicht, und mindestens eine so genannte Schicht (21) "hoher" Dichte umfasst, wobei seine Dichte von 0,8 g/cm³ bis 1,2 g/cm³ reicht.

## Claims

1. Method for manufacturing a tubular insulating device (1) comprising a lateral wall (10) of thickness Ep, of axial length L, provided with an axial direction (11), wherein a two-dimensional structure insulating material (2) of thickness E_{M} < Ep is fed in, with for example E_{M} at most equal to 0.5 Ep, and said insulating material (2) is shaped by superposing a plurality of N layers Cᵢ (3) of said insulating material (2), with N at least equal to 2 and i ranging from 2 to N, said tubular insulating device (1) comprising at least two layers C₁ and C₂ (3) of said insulating material (2), **characterised in that**:
a) for each layer Cᵢ (3), a plurality of nᵢ axial insulating elements Eᵢ (4) pre-cut in said insulating material (2) is formed in such a way that said nᵢ insulating elements Eᵢ (4) can form said layer Cᵢ(3), after an edge (40) to edge (40') juxtaposition and thanks to suitable deformation,
b) a rough form is formed (5) of said tubular insulating device (1) by:
b1) assembling, using an adhesive (6), more preferably on an axial conformation mandrel (7), layer after layer, and by starting with the first interior layer Cᵢ (3a), the nᵢ elements Eᵢ (4) of each layer Cᵢ (3) juxtaposed edge (40) to edge (40') along a plurality of joining zones Jᵢ (30), the elements Eᵢ₊₁ of the layer Cᵢ₊₁ being offset relative to the elements Eᵢ of the more interior layer Cᵢ, in such a way that the plurality of joining zones Jᵢ₊₁ is offset relative to the plurality of joining zones Jᵢ, and that as such said tubular insulating device (1) obtained in the end has high mechanical strength,
b2) then by polymerising said adhesive (6), in such a way as to rigidify said rough form (5),
c) said rough form (5) of tubular element is subjected to a heat treatment, with said heat treatment comprising a baking at a temperature of at least 800°C, in such a way as to carbonise said adhesive (6), and as such to obtain, where applicable after separation of said mandrel, said tubular insulating device (1).

2. Method according to claim 1 wherein said joining zones Jᵢ (30) comprise axial joining zones J_{Ai} (31) with an axial length at most equal to L.

3. Method according to claim 2 wherein said joining zones Jᵢ (30) comprise transversal joining zones J_{Ti} (32) in such a way as to obtain a tubular insulating device (1, 1') of substantial axial length L.

4. Method according to any of claims 1 to 3 wherein, before the step b), using said nᵢ insulating elements (4), for example using nᵢ planar insulating elements (4a), nᵢ curved insulating elements (4b) are formed, in such a way as to have a radius of curvature Rᵢ in a transversal plane perpendicular to said axial direction (11), corresponding to that of the corresponding said layer Cᵢ, said radius Rᵢ increasing by one layer Cᵢ at the next layer Cᵢ₊₁ with greater average diameter Dᵢ₊₁.

5. Method according to any of claims 1 to 4 wherein, during said step b2), said rough form (5) is placed in a conformation mould (8) comprising, for example, two half-shells (80), in such a way that the two half-shells (80) brought together and closed provide to said rough form (5) and in the end to said tubular insulating device (1) dimensions or geometric measurements that are predetermined and that can be reproduced.

6. Method according to any of claims 1 to 5 wherein said insulating material (2) is a material (2') with an expandable graphite base of thickness E_{M} ranging from 2 to 30 mm, and ranging preferably from 5 to 20 mm.

7. Method according to claim 6 wherein said material with an expandable graphite base (2') is a multilayer material (2a) comprising at least one so-called "low" density layer (20), with its density being less than 0.4 g/cm³ (400 kg/m³) and at least one so-called "high" density layer (21), with its density being at least equal to 0.4 g/cm³.

8. Method according to claim 7 wherein said high-density layer (21) has a density ranging from 0.8 g/cm³ to 1.2 g/cm³ and wherein said low-density layer (20) has a density ranging from 0.03 g/cm³ to 0.2 g/cm³.

9. Method according to any of claims 7 to 8 wherein said multilayer material (2a) is a so-called "triple layer" material (2b) comprising two outer high-density layers (22, 21) arranged on either side of a central low-density layer (23, 20) and wherein the thickness E_{f} of the central low-density layer (20, 23) is at least two times thicker than the thickness Eₕ of the outer high-density layer (21, 22).

10. Method according to any of claims 1 to 9 wherein said adhesive (6) comprises a thermosetting resin, for example a phenolic resin, or a thermoplastic resin, said adhesive being in powder form or in liquid form, said adhesive being advantageously loaded with an electrically conductive powder of graphite or carbon black .

11. Method according to any of claims 1 to 10 wherein said heat treatment comprises a complementary methane flash pyrolysis treatment in such a way as to increase the rigidity of said insulating device.

12. Method according to any of claims 1 to 11 wherein said heat treatment comprises a step of purification of said insulating device wherein said insulating device is brought to 2000°C, in such a way as to eliminate any volatile element.

13. Method according to any of claims 1 to 12 wherein said tubular insulating device (1) forms a tube (1a) with a constant section over its axial length L, said section being circular with diameter D or oval or polygonal, and wherein said axial length L varies from 0.1 m to 3 m, said thickness Ep varies from 5 mm to 80 mm and the ratio L/D ranges from 0.5 to 5.

14. Method according to any of claims 1 to 12 wherein said tubular insulating device (1) forms a tube (1b) with a uniformly variable section over its axial length L, said section being circular of average diameter D_{M} or oval or polygonal, and wherein said axial length L varies from 0.1 m to 3 m, said thickness Ep varies from 5 mm to 80 mm and the ratio L/D_{M} ranges from 0.5 to 5.

15. Tubular insulating device (1) comprising a lateral wall (10) of thickness Ep ranging from 5 mm to 80 mm, of axial length L ranging from 0.1 m to 3 m, provided with an axial direction (11), said lateral wall (10) forming a superposition being constituted by a plurality of N layers Cᵢ (3) of an insulating material (2), with i ranging from 2 to N, **characterised in that**:
a) each layer Cᵢ (3) comprises a plurality of nᵢ axial insulating elements Eᵢ (4) in said insulating material (2) in such a way that said axial insulating elements Eᵢ (4) are juxtaposed edge (40) to edge (40') along a plurality of joining zones Jᵢ(30),
b) two successive layers Cᵢ and Cᵢ₊₁ are assembled using an adhesive (6), said successive layers Cᵢ and Cᵢ₊₁ being oriented on in relation to the other in such a way that the plurality of joining zones Jᵢ₊₁ of said layer Cᵢ₊₁ is offset relative to the plurality of joining zones Jᵢ of said layer Cᵢ, and that as such said tubular insulating device (1) obtained in the end has high mechanical strength, and wherein:
1) said insulating material (2) is a material (2') with an expandable graphite base of thickness E_{M} ranging from 2 to 30 mm, and ranging preferably from 5 to 20 mm,
2) said material with an expandable graphite base (2') is a multilayer material (2a) comprising a so-called "low" density layer (20), with its density ranging from 0.03 g/cm³ to 0.2 g/cm³, and at least one so-called "high" density layer (21), with its density ranging from 0.8 g/cm³ to 1.2 g/cm³.
